(19)

Europäisches
Patentamt

European
Patent Office

Office européen
des brevets

(11)   **EP 2 604 126 B1**

(12)   **EUROPEAN PATENT SPECIFICATION**

(45) Date of publication and mention
of the grant of the patent:
**25.02.2015 Bulletin 2015/09**

(21) Application number: **11193165.5**

(22) Date of filing: **13.12.2011**

(51) Int Cl.:
*A23L 1/00* [(2006.01)]    *A23G 3/52* [(2006.01)]
*A21D 2/26* [(2006.01)]    *A23C 9/152* [(2006.01)]
*A23K 1/08* [(2006.01)]    *A21D 13/00* [(2006.01)]
*A23G 9/38* [(2006.01)]

(54) **Aerated food products with improved foam stability**

Durchlüftete Lebensmittelprodukte mit verbesserter Schaumstabilität

Produits alimentaires aérés avec stabilité améliorée de mousse

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.06.2013 Bulletin 2013/25**

(73) Proprietor: **Nestec S.A.**
**1800 Vevey (CH)**

(72) Inventors:
• **Jung, Jin-Mi**
**1066 EPALINGES (CH)**
• **Sschmitt, Christophe Joseph Etienne**
**1077 SERVION (CH)**
• **Gunes, Zeynel Deniz**
**1005 Lausanne (CH)**
• **Gehin-Delval, Cécile**
**25370 Les Hôpitaux Neufs (FR)**
• **Limbach, Hans Jörg Werner**
**1066 Epalinges (CH)**

(74) Representative: **Elleby, Gudrun et al**
**Nestec S.A.**
**CT-IAM**
**Avenue Nestlé 55**
**1800 Vevey (CH)**

(56) References cited:
**WO-A2-2004/049819**

• **DATABASE BIOSIS [Online] BIOSCIENCES INFORMATION SERVICE, PHILADELPHIA, PA, US; January 2011 (2011-01), JORDENS SOPHIA ET AL: "Disassembly and Reassembly of Amyloid Fibrils in Water-Ethanol Mixtures", XP002674681, Database accession no. PREV201100117452 & BIOMACROMOLECULES, vol. 12, no. 1, January 2011 (2011-01), pages 187-193, ISSN: 1525-7797(print), DOI: DOI: 10.1021/BM101119T**

EP 2 604 126 B1

**Description**

**Field of the invention**

The present invention relates to aerated food products with improved foam stability. The products of the invention are characterized by the presence of protein aggregates in the form of mixtures of different types of aggregates. In particular the protein aggregates comprise fibrils together with another structure of protein aggregates, selected from worm-like aggregates, spherical aggregates or mixtures thereof. The use of those mixtures of aggregates to enhance foam stability as well as a process for preparing such aerated food products are also part of the invention.

**Background of the invention**

Stability against coarsening, drainage and phase separation is a major problem for many aerated food products, for example frozen aerated food products such as ice cream, in particular when it is desired to avoid the use of synthetic emulsifiers.

Proteins have been used as agents to stabilize aerated food products, where they can act as emulsifiers, surface active agents and/or bulking agents to stabilize emulsions and foams. When using proteins as stabilizing agents, a problem is to have products that combine nutritional value, sufficient foam stability and good texture.

Protein modification resulting in some level of aggregation has also been described as a way to improve the functionality of proteins in foamed products. Numerous processes leading to different types and levels of aggregation can therefore be found in the prior art.

EP 1839492 describes for example the preparation of whey protein micelles or spherical agglomerates of denatured whey protein as well as their use in food preparation. The document describes the energetically favourable configuration of these aggregates which provides good stability of these structures in a hydrophilic environment. However, the foaming properties of those aggregates are limited.

Another form of protein aggregates is described in WO 2004/049819 which relates to a method for improving the functional properties of globular proteins providing at least partial aggregation of the proteins in the form of fibrils. The use of such protein fibrils in the preparation of food stuffs, such as dairy products, for example (aerated) desserts, yogurts, flans, in bakery or confectionary applications, such as frappe, meringue, marshmallows, in cream liqueurs or in beverage foamers, such as cappuccino foamers is also described. The use of fibrils is described as thickening agent, foaming agent, viscosity enhancing agent and/or gelling agent.

However, the production of those fibrils is high in energy and cost due to the prolonged heating time and temperature.

Therefore, there is still a need to provide good foam stability of aerated products at a reasonable price while not compromising on the quality of the product.

**Object of the invention**

The present invention proposes a solution consisting in using mixtures of protein aggregates comprising fibrils associated with another structure of protein aggregate, preferably worm-like aggregates and/or spherical aggregates to improve the foam stability of aerated food products.

**Summary of the invention**

In a first aspect, the present invention pertains to an aerated food product comprising from 0.5 to 10 wt%, preferably from 2 to 6 wt% of proteins at least partially aggregated, wherein the aggregated proteins comprise fibrils and at least one other form of aggregates selected from worm-like aggregates, spherical aggregates and mixtures thereof which spherical aggregates have a mean diameter from 100 nm to 900 nm, and which fibrils have a cross section which is 4-10 nm.

The present invention further relates to the use of mixtures of protein aggregates comprising fibrils with at least one other form of protein aggregates selected from worm-like aggregates, spherical aggregates and mixtures thereof to enhance foam stability of aerated food products which spherical aggregates have a mean diameter from 100 nm to 900 nm and which fibrils have a cross section which is 4-10 nm.

A process for the preparation of an aerated food product comprising the steps of preparing an ingredient mix and contacting it with a mixture of protein aggregates comprising fibrils associated with another form of aggregates, preferably worm-like aggregates and/or spherical aggregates, then incorporating air into the mix to provide an aerated foam with an overrun comprised between 20 and 600% and finally optionally processing said foam to a ready-to-eat end product is also an object of the invention.

An alternative process comprising the steps of preparing a mixture of protein aggregates comprising fibrils associated with another form of aggregates, preferably worm-like aggregates and/or spherical aggregates, aerating said mixtures and then contacting it with an ingredient mix before optionally processing the obtained foam to a ready-to-eat product is also an object of the invention.

**Detailed description of the invention**

Unless otherwise specified, percentages given correspond to percentages by weight of the end product.

Surprisingly it has now been found by the applicant that mixtures combining different types of protein aggregates and more particularly associating fibrils with at least one other form of protein aggregates chosen from worm-like aggregates and/or spherical aggregates were acting synergistically leading to excellent foam stability in aerated products. The solution proposed by the invention advantageously allows using low amounts of fibrils which are expensive raw materials and partially replacing them by other types of aggregates while not compromising on the product quality. It has therefore been found that lower amounts of protein fibrils than what was known heretofore could be used and combined with other protein aggregates to provide similar or even better properties to the aerated products containing them.

According to a first aspect, the invention therefore pertains to an aerated food product, comprising from 0.5 to 10wt%, preferably from 2 to 6wt% of proteins at least partially aggregated, wherein the aggregated proteins comprise fibrils and at least one other form of protein aggregates selected from the group consisting of worm-like aggregates, spherical aggregates and mixtures thereof which spherical aggregates have a mean diameter from 100 nm to 900 nm, and which fibrils have a cross section which is 4-10 nm.

In the framework of the invention "fibrils" are meant to designate aggregates obtainable by heating a protein solution containing from 0.1 to 5% of globular protein for 30 min to 48 hours at 60°C to 120°C and a pH below 2.5. According to a particular embodiment, once cooled, the pH of the obtained fibrils solution is adjusted to between 6 and 7 to facilitate further processing of the solution with an ingredient mix.

Preferably, the fibrils are obtainable by heating a protein solution containing from 2 to 4% of the globular protein. Preferably, the protein solution is heated from from 1 to 10 hours.

For example, the protein solution is heated at a temperature of from 80°C to 98°C.

In particular the protein solution is heated at a pH below 2. Preferably the pH is above 1.

When reference is made to the pH in the text, it refers to a value measured at room temperature.

Protein fibrils are semi-flexible aggregates which can be also characterized by a contour length or total length varying from 500 nm to 10 microns right after the heat treatment or from 50 nm to several microns in the final product after the fibrils have been sheared and cut down into shorter ones. The fibrils may also be characterized by their cross section which is around 4-10 nm. On the other hand, the aspect ratio (length/cross section) is dependent on the contour length (the cross section being more or less monodisperse). For the longest fibrils, it can be more than 2500, for the shortest ones, it can be around 10.

In the framework of the invention "spherical protein aggregates" are meant to designate aggregates obtainable by heating a protein solution containing from 0.5 to 12wt% of globular proteins for 15 min at 85°C and a pH of 5.8 to 6.2 in the absence of divalent cations such as $Ca^{2+}$ in the dispersion. Such aggregates are described for instance in EP 1839492. Spherical protein aggregates can further be characterised by their mean diameter which can be determined using Transmission Electron Microscopy (TEM). The mean diameter of spherical aggregates is typically smaller than 1 micron, preferably between 100nm and 900nm, more preferably between 100-770nm, most preferably between 200 and 400nm.

In the framework of the invention "worm-like protein aggregates" are meant to designate aggregates which are obtainable by heating a protein solution containing from 0.5 to 12wt% of globular proteins for 15 min at 85°C and a pH of 7 in the absence of salt in the dispersion. These types of aggregates have been described in Mahmoudi et al. 2007. Journal of Agricultural and Food Chemistry, 55, 3104-3111, the content of which is here-included by reference.

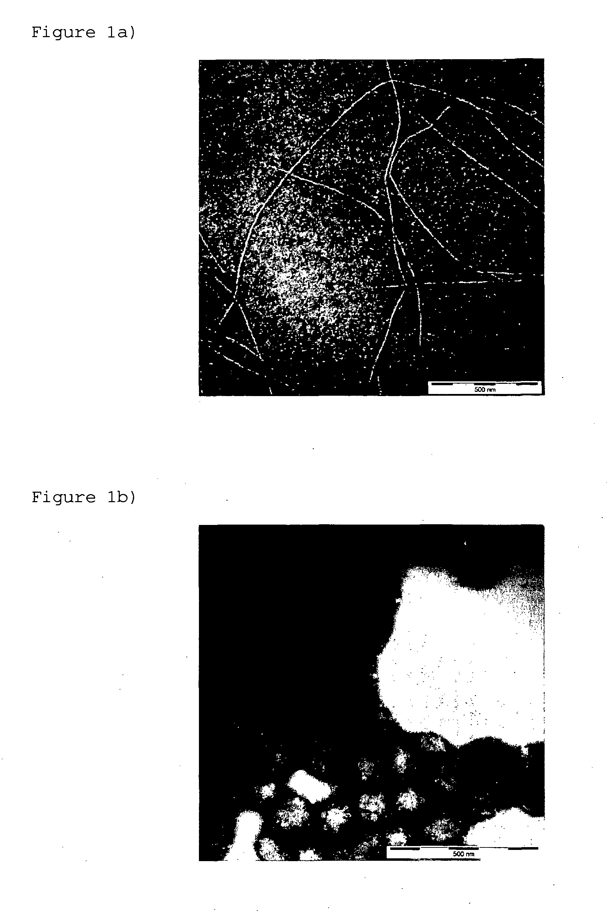

The different types of aggregates described in the present invention are identifiable and doubtless recognisable in end products through microscopic images. Figures 1a), 1b) and 1c) show TEM micrographs of different structures.

Preferably in the aerated food product of the invention, at least 75% of added protein is present in the form of mixtures of aggregates as defined above. According to a particular embodiment, the product comprises from 0.1 to 4 wt% of mixtures of protein aggregates as defined above.

Preferably, the mixtures of aggregates include 25% of protein fibrils, more preferably 50%.

According to a particular embodiment, the aerated product of the invention comprises a mixture of protein fibrils and spherical aggregates.

According to another embodiment, the aerated product of the invention comprises a mixture of protein fibrils and worm-like aggregates.

According to a third embodiment, the aerated product of the invention comprises a mixture of protein fibrils, spherical aggregates and worm-like aggregates.

The protein aggregates from the products of the invention are preferably made from a globular protein selected from whey proteins, egg albumins, blood proteins, soy proteins, wheat proteins, potato proteins, pea proteins, lupin proteins and canola proteins. More preferably, the protein aggregates are made from beta-lactoglobulin.

The food products of the invention are characterised by their degree of aeration or overrun, typically comprised between 20% and 600%. The overrun is defined as following:

$$\text{Overrun \% } = \frac{(\text{volume of aerated product} - \text{Volume of mix})}{\text{volume of mix}} \times 100$$

Particular overrun ranges are preferred depending on the specific food product, and well known by a skilled person in the art. For example, for a frozen confectionery product, the overrun is typically comprised between 20% and 250%, preferably between 50% and 150%.

Examples of aerated food products according to the invention are frozen confectionery products, dessert mousses, dairy products, fermented dairy products, soups, sauces, mayonnaise and beverages, dressings, liquid dairy products, creams, imitation creams, concentrated milks, condensed milk, non-dairy creams, toppings, chilled dairy, confectionery filling, candies, dough, batter, pet food and milk froth.

Preferably, the aerated food product according to the invention is selected from indulgent dairy foams such as mousse desserts, aerated confectionery products such as meringues, and frozen confectioneries such as ice cream, sorbet, mellorine, frozen yoghurt, milk ice, slush, frozen beverage, milk shake or frozen dessert.

Combining the protein aggregates in these applications not only provides good foaming and foam stability but also advantageously allows optimizing the food product final appearance and texture as shown in the examples below.

In the particular case of frozen confectioneries it has been found that in addition to the above-mentioned advantages the combination of different types of protein aggregates also compensates the low amount of fibrils by preventing or reducing the coarsening of the air microstructure of frozen confections usually observed after heat shock and responsible for deteriorating the texture of said products. The frozen confectioneries comprising the mixtures of the invention therefore have good heat shock stability. What is meant by heat shock stability is the ability of a product subjected to several cycles of temperature variations to maintain its microstructure i.e. to avoid coarsening of the air microstructure. The applicant has found that when subjected to heat shock, the frozen confections comprising the combination of aggregates described above show reduced coarsening compared to ice cream not containing the above-mentioned protein aggregates and in addition show equal slowing down of air microstructure coarsening processes using protein fibrils alone. The advantage of the present invention is that a large part (up to 70%) of protein fibrils can be replaced by other economically more attractive protein aggregates while keeping all other advantages.

This effect can be characterized e.g. by X-ray tomography (ref: R. Mousavi et al., Imaging food freezing using X-ray microtomography, International Journal of Food Science and Technology 2007, 42, 714-727.)

According to a particular embodiment, the aerated product of the invention consists in a frozen confectionery product comprising from 1.5 to 15 % milk solids non fat (MSNF), up to 20% fat, from 5 to 30% of a sweetening agent, up to 3% of a stabilizer system and from 0.1 to 4 % of protein aggregates in the form of a mixture of rod-like proteins associated with another form of protein aggregates, preferably worm-like proteins and/or spherical proteins.

The milk solids non fat used in the frozen confection of the invention may be powdered or concentrated defatted sweet whey for example. They may also include powdered or concentrated skim milk. MSNF may also be derived from a commercial mixture of milk powder and modified whey proteins.

Preferably, the product of the invention comprises from 0.5 to 20% fat, and preferably from 6 to 14% fat. The fat may be obtained from a vegetal source, such as e.g. palm, coconut, soybean, rapeseed, olive, palm kernel oil, hydrogenated coconut oil, hydrogenated soybean oil, palm olein and their mixtures. The fat may also be obtained from an animal source, preferably milk (cream) butter fat and/or its fractions.

The product then comprises from 5 to 30% of a sweetening agent. By "sweetening agent" it is to be understood a mixture of ingredients which imparts sweetness to the final product. These include sucrose, glucose, fructose, natural sugars like cane sugar, beet sugar, molasses, other plant derived nutritive sweeteners, and non-nutritive high intensity sweeteners.

The product comprises a stabilizer system in an amount of preferably from 0.1 to 3%. By stabilizer system is meant at least one emulsifier and/or stabilizer. Suitable stabilisers include carob flour, guar flour, alginates, carboxymethylcellulose, xanthan, carrageenan, locust bean gum, gelatine and starches. Any food grade emulsifier typically used in ice confection could be used. Natural emulsifiers are preferred and include for example egg yolk.

According to another embodiment, the aerated food product of the invention consists in an indulgent dairy foam such as a mousse.

According to another embodiment, the aerated food product of the invention consists in a confectionery aerated product such as a meringue or a confectionery filling.

In another aspect, the invention pertains to a process for the preparation of an aerated food product which comprises as a first step contacting an ingredient mix typically used for the preparation of the food product, with a mixture of protein aggregates comprising fibrils together with another form of aggregates, preferably worm-like aggregates and/or spherical aggregate. Air is then incorporated into the mix to provide a foam with an overrun comprised between 20 and 600%. The foam is finally optionally processed to provide a ready-to-eat food product.

An alternative process comprising the steps of preparing a mixture of protein aggregates comprising fibrils associated with another form of aggregates, preferably worm-like aggregates and/or spherical aggregates, aerating said mixtures and then contacting it with an ingredient mix before optionally processing the obtained foam to a ready-to-eat product is also an object of the invention.

For example, in the case of an indulgent foam dessert such as a mousse, an aqueous foam can be formed by heating an ingredient mix typically comprising fat, milk solids non fat, a sweetening agent and stabilizers with 0.5 to 2% of the aggregate mixtures of the invention and heating said mix to a temperature in a range of 60 to 100 °C, cooling down the mixture to a temperature in a range of 0 to 30°C and aerating the mixture.

When the product of the invention consists in a meringue, to process includes combining and mixing 2 to 10% of the aggregate mixture, preferably egg white or egg white powder, sucrose, preferably icing sugar, at least one monosaccharide, and optionally cocoa powder and salt, with sufficient water to form a mixture having a moisture content of between about 18% and about 30% by mass; aerating the mixture to a density of between about 0.20 and 0.40 kg/litre and extruding the aerated mixture.

According to a particular embodiment, when the aerated food product consists in a frozen confectionery product, the process of the invention consists in mixing from 1.5 to 15% of milk solids non fat, up to 20% fat, from 5 to 30% of a sweetening agent and up to 3% of a stabilizer system. The mix is then homogenized and pasteurized. In a third step 0.1 to 4%, preferably 0.1 to 1.5% of a mixture of rod-like protein aggregates with another form of aggregates is added to the mix which is then frozen while aerated.

According to another embodiment, the aggregate mixture is added to the initial mix, before homogenization and pasteurization.

Homogenization and pasteurization can be done in any order according to usual conditions known to a skilled person in the art. For example pasteurization is made at around 80 to 90°C during 10 to 60 s. The mixture may then be cooled to around 2 to 8°C by known means, and aged.

According to one embodiment, the mixture is then frozen at around -3° to -10°C with steering with injection of gas so as to produce a degree of overrun of the order of 20 to 150% for example. The mixture obtained may then be further cooled by extrusion at temperature below -11°C in a refrigerated single or twin screw extruder and hardened by freezing at around -20 to -40°C.

According to another embodiment, the mixture is quiescently frozen. By quiescent freezing, is meant subjecting a product to negative temperatures into a home freezer cabinet, or a hardening tunnel at factory or other devices where the product is kept statically at temperatures between e.g. -12° and -24°C without any agitation or intervention.

According to a specific embodiment, the process of the invention includes the aseptic packaging of the unfrozen mix comprising the aggregate mixture to allow a further quiescent freezing, e.g. by a consumer in a home freezer.

The protein aggregates used in the process of the invention are those defined above and as here-in defined.

**Figures**

The present invention is further described hereinafter with reference to some embodiments shown in the accompanying figures in which:

**Figure 1:** shows TEM micrographs of beta-lactoglobulin aggregates obtained upon heat treatment at different pHs and providing respectively protein fibrils (a), spherical aggregates (b) and worm-like aggregates (c) (negative staining)

**Figure 2:** represents the foaming property and foam stability over time of an aqueous solution comprising a mixture of beta-lactoglobulin fibrils with spherical beta-lactoglobulin aggregates, compared to the aggregates taken separately.

**Figure 3:** represents the foaming property and foam stability over time of an aqueous solution comprising a mixture of beta-lactoglobulin fibrils with worm-like beta-lactoglobulin aggregates, compared to the aggregates taken separately.

**Figure 4:** represents the foaming property and foam stability over time of an aqueous solution comprising a mixture of beta-lactoglobulin fibrils with spherical beta-lactoglobulin aggregates and worm-like beta-lactoglobulin aggregates, compared to the aggregates taken separately.

**Figures 5:** represents cumulative distributions in ice cream for respectively a control, a product comprising protein fibrils and a product comprising a mixture of protein fibrils with worm-like aggregates and spherical aggregates, after two heat shock cycles.

The present invention is further illustrated by means of the following non-limiting examples.

**Examples**

Example 1: Preparation of protein aggregates

Three different structures and sizes of aggregates were prepared according to three different processes performed independently of each other according to the following procedure:

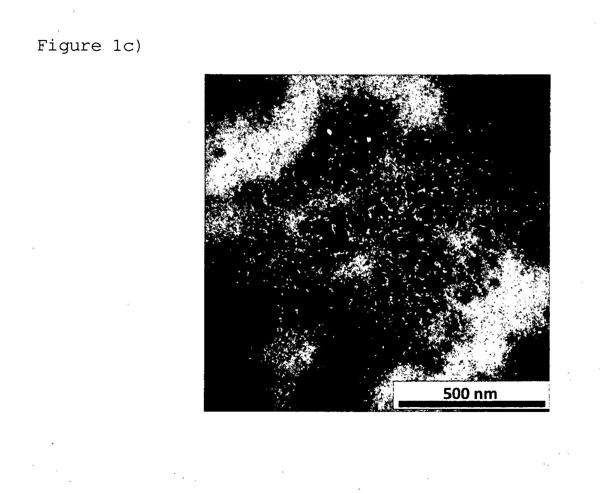

- $\beta$-Lactoglobulin isolate (Davisco Foods International, Inc., Le Sueur, MN, USA) and demineralised water were mixed at room temperature and the pH was adjusted to 2.0 (fibrils), respectively 5.8 (spherical aggregates) and 7.0 (worm-like aggregates). The solution contained 4 wt% of $\beta$-Lactoglobulin isolate (equivalent to 3.46 wt% of $\beta$-Lactoglobulin).
- The solution was rapidly heated under gentle steering to T=90°C (fibrils), respectively 85°C (spherical aggregates) and 85°C (worm-like aggregates) and kept at that temperature for 5 hours (fibrils), respectively 15 min (spherical aggregates) and 15 min (worm-like aggregates).
- The solution was rapidly cooled and then stored at T=4°C. Samples were taken to prove the aggregation status with help of electron microscopy, as shown in Figure 1 which shows TEM micrographs of beta-lactoglobulin aggregates obtained upon heat treatment (negative staining)*

* Transmission Electron Microscopy (TEM)

A drop of the diluted solution (1-0.1% final wt concentration) was casted onto a carbon support film on a copper grid. The excess solution was removed after 30 seconds using a filter paper. Contrast to electrons was achieved by negative staining by adding a droplet of Phosphotungstic acid solution 1% (PTA, pH 7, Sigma-Aldrich, Switzerland) onto the grid, during 15 seconds, after deposition of $\beta$-lactoglobulin aggregates solution. Any excess of staining agent was removed again by a filter paper. Electron micrographs were acquired on a CCD camera using a Philips CM100 Biotwin Transmission Electron Microscope operating at 80 kV.

Figure 1 represents the TEM micrographs of the 3 types of aggregates prepared.

All aggregates mentioned in the following examples were prepared according to Example 1.

Example 2: Foamability and foam stability of mixtures of aggregates (not according to the invention)

Method: Foamscan device (Teclis, Longessaigne, France) (air sparging), foamability and foam volume stability of different aqueous solutions of aggregates foamed to about 500% overrun with the help of nitrogen were studied. A foam of 120 cm$^3$ was made from an initial liquid volume of 20 mL, at room temperature, using a frit with a porosity of 4, and a sparging rate of 80%.

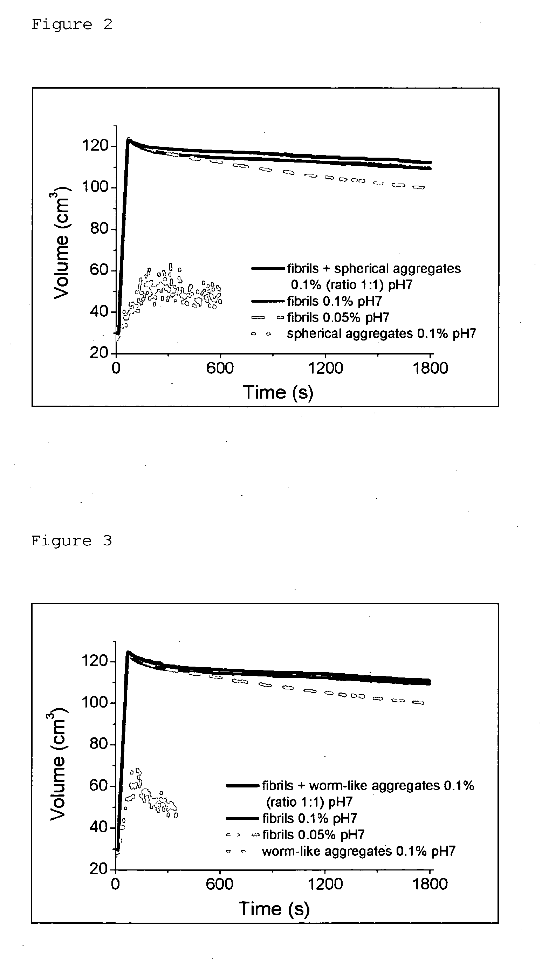

Figures 2 shows the foam stability obtained with mixtures of fibrils together with spherical aggregates compared to aggregates used separately. The total protein content was kept the same, namely to 0.1%.

While the spherical aggregates by themselves did not foam at all, the other samples foamed. Looking at aggregates alone, protein fibrils provide the best results. But their stability is considerably reduced when their usage level is reduced by 50%. Unexpectedly, when this part of the fibrils is replaced by spherical aggregates, stability is restored. The mixture of fibrils and spherical aggregates showed the best foam stability over time. This result being superior or at least equivalent to the combined result of spherical aggregates on the one hand and fibrils on the other, it can be concluded that there is synergy.

Figure 3 shows the foam stability obtained with mixtures of fibrils together with worm-like aggregates compared to aggregates used separately. The total protein content was kept the same, namely to 0.1%.

Similar conclusions can be drawn from these mixtures. In particular the mixture of 0.05% fibrils and 0.05% worm-like aggregates showed foam stability over time comparable to that obtained with 0.1% of fibrils.

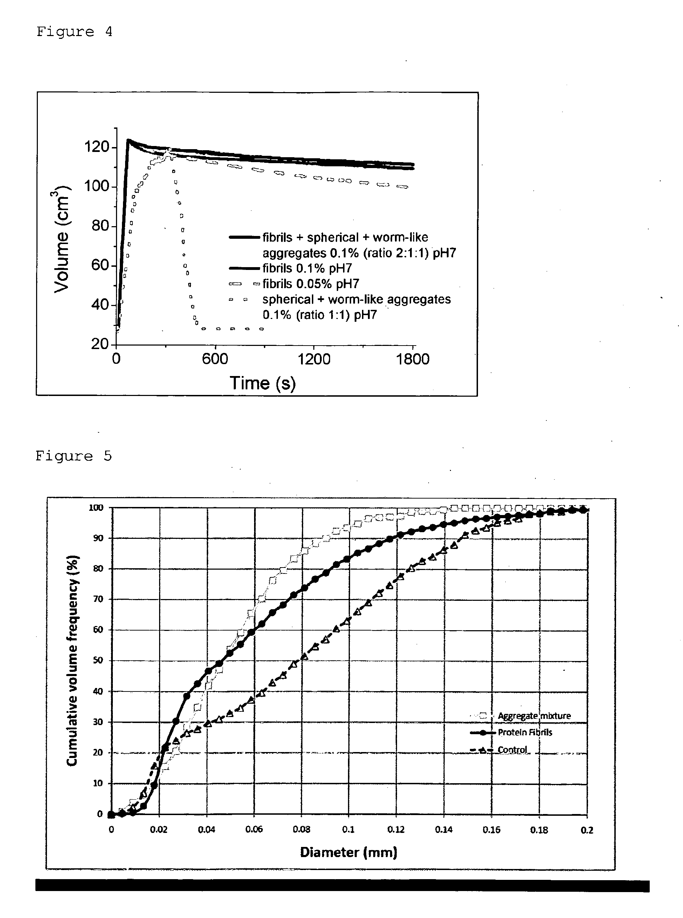

Figure 4 shows foam stability obtained with mixtures of fibrils together with worm-like aggregates and spherical aggregates in the following ratio (1:0.5:0.5) compared to a mixture worm-like and spherical aggregates on the one hand and fibrils on the other. The total protein content was kept the same.

All samples foamed. The mixture of fibrils, spherical and worm-like aggregates showed the best foam stability over time.

Example 3: Chocolate mousses

The following recipes were used to prepare chocolate mousses:

Control

| | weight | Protein content | Protein content for 100g mousse |
|---|---|---|---|
| Chocolate | 100g | 5% | 2g |
| 3 egg yolk | 50g | 16% | 3.2g |
| 3 egg white | 100g | 10% | 9.2g |

Chocolate was melted at 50°C before mixing with egg yolk. Egg white was foamed using a Hobbart mixer (speed 3, 1 min 20 sec). Foam was gently incorporated into the chocolate mix. The mix is then put at 4°C for cooling.

Examples

| | weight | Protein content | Protein content for 100g mousse |
|---|---|---|---|
| Chocolate | 100g | 5% | 2g |
| 3 egg yolk | 50g | 16% | 3.2g |
| Protein aggregates solution | 100g | 4% | 1.6g |

Chocolate was melted at 50°C before mixing with egg yolk. A protein aggregate suspension was foamed using a Hobbart mixer (speed 3, 1 min 20 sec). Foam was gently incorporated into the chocolate mix. The mix then put at 4°C for cooling.

Tested samples:

| | Fibrils | Spherical | Worms |
|---|---|---|---|
| Ref 3a | 4% | - | - |
| Ref 3b | - | - | 4% |
| Ref 3c | - | 4% | - |
| 3d | 2% | 2% | - |
| 3e | 2% | 1% | 1% |
| 3f | 1% | 2% | 1% |

The texture of the mousses were evaluated visually and using a spoon. Ref 3a) was the most compact and dry-looking mousse. Ref 3b) was a bit lighter and Ref 3c) was too liquid. Improvement in the texture was observed with all the samples illustrating the invention with a nice overall texture and nice shape provided with the spoon.

Example 4: Meringue

Control:

50 g white egg , 50 g sugar

Egg white (50g) and 20 g sugar were weighted in a Hobbart bowl then beat at speed 2 for 2 min. 20g sugar were added while aerating (speed 2, 2 min). The last 10g sugar were added while aerating 10 more sec.

An icing bag was filled (tip size 18) and rosace (star) shapes were formed on a baking sheet on a tray, which were then put immediately in a preheated oven at 120°C and baked for 2 hours.

The meringues were cooled at room temperature and kept in a dry place.

|         | Rods | Spherical | Worms | Overrun % |
|---------|------|-----------|-------|-----------|
| Ref 4a  | 4%   | -         | -     | 590       |
| Ref 4b  | -    | 4%        | -     | 196       |
| Ref 4c  | -    | -         | 4%    | 73        |
| 4d      | 2%   | 2%        | -     | 602       |
| 4e      | 2%   | -         | 2%    | 433       |
| 4f      | 2%   | 1.5%      | 0.5%  | 565       |

None of the reference samples (use of a single form of aggregates) gave satisfying results. While Ref 4a) had sufficient overrun, the product had a pronounced dark colour unacceptable. On the other hand, no satisfying overrun could be obtained for references 4b and 4c. The samples according to the invention were all improved compared to the references. They all showed satisfying overrun with nice visual aspect and color.

Example 5: Ice cream

For this example three different ice creams have been produced. The first ice cream termed 'control' is based on a standard ice cream containing commercial whey protein ingredient. For the second ice cream 'protein fibrils' the native whey proteins have been replaced by protein fibrils. The third ice cream 'aggregate mixture' concerns the present invention and contains a mixture of three types of aggregates namely protein fibrils, worm-like aggregates and spherical aggregates.

**Preparation**

Five separate mixes were prepared in order to produce the three ice creams using the ingredients listed in the following tables:

**Recipes:**

• **Mix 1::**

| Ingredient | Mass [kg] |
|------------|-----------|
| Water | 61.14 |
| Dried glucose syrop (DE40) | 9.50 |
| Sucrose | 9.00 |
| Whey protein replacer (15% proteins) | 8.90 |
| Coconut fat | 7.30 |
| Skim milk powder | 2.20 |
| Dextrose monohydrate | 1.50 |
| Emulsifier / Stabilizer | 0.46 |

• Mix 2:

| Ingredient | Mass [kg] |
|------------|-----------|
| Water | 32.00 |
| Dried glucose syrop (DE40) | 11.00 |
| Sucrose | 9.00 |

(continued)

| Ingredient | Mass [kg] |
|---|---|
| Lactose | 5.34 |
| Coconut fat | 7.30 |
| Skim milk powder | 2.20 |
| Dextrose monohydrate | 1.50 |
| Emulsifier / Stabilizer | 0.46 |

• Mix 3:

| Ingredient | Mass [kg] |
|---|---|
| Water | 30.00 |
| Non-aggregated whey proteins | 0.30 |
| Protein fibrils | 0.90 |

• Mix 4:

Identical to Mix 2

• Mix 5:

| Ingredient | Mass [kg] |
|---|---|
| Water | 30.00 |
| Non-aggregated whey proteins | 0.20 |
| Protein fibrils | 0.30 |
| Worm like aggregates | 0.34 |
| Spherical aggregates | 0.36 |

• Full ice cream mixes:

The ice cream 'control' has been prepared from mix 1. The ice cream 'protein fibrils' has been prepared from mix 2 and mix 3. And the ice cream 'aggregate mixtures' has been prepared from mix 4 and mix 5.

• Final protein and protein aggregate concentrations:

The major protein content of the ice creams originates from the whey protein replacer, the skim milk powder and the different protein aggregate solutions (some minor non-milk protein content, less than 0.02 wt% originates from the used stabilizers). The following table shows the content of proteins present in different forms for the three ice creams. All quantities are given in weight percent.

| Sample | Total protein | Total Whey | Protein Fibrils | Worm-like aggregates | Spherical aggregates |
|---|---|---|---|---|---|
| Control | 2.14 | 1.55 | 0.00 | 0.00 | 0.00 |
| Protein fibrils | 1.92 | 1.33 | 0.90 | 0.00 | 0.00 |
| Aggregate mixture | 1.92 | 1.33 | 0.30 | 0.34 | 0.36 |

**Ice cream mix preparation**

- All ingredients of mixes 1, 2 and 4 were mixed with water at T=60°C.
- Mixes 1, 2 and 4 were kept at T=60°C and all ingredients let hydrate for 2 hours.
- Mixes 1, 2 and 4 were then run through a pasteurization /homogenization line. Pasteurization was done at 86 °C for 30 seconds. Homogenization was done with a high pressure homogenizer (APV, type: APV-mix) with two stages at 140 and 40 bars respectively.
- The mixes were then kept at T=4°C in order to maturate for 12 to 20 hours.
- For ice cream 'protein fibrils' mix 2 and mix 3 where mixed together under slow stirring before ice cream production.
- For ice cream 'aggregate mixture' mix 4 and mix 5 where mixed together under slow stirring before ice cream production.

**Ice Cream production**

- All three ice creams were produced in a Hoyer freezer (Technohoy MF 50). The outlet temperature was set to -5°C, the back pressure to 1.5 bars and the dasher speed to 500 rpm.

- The ice cream was filled into 120 ml plastic cups.

**<u>Heat shock stability test</u>**

The air microstructure of the ice creams has been investigated with help of x-ray tomography (Scanco medical $\mu$CT 35 operated in a cold room at T=-16°C) before and after heat shock. Two cycles of a 72 hour heat shock protocol were applied.

The ice cream samples were scanned using a custom designed high resolution desktop computerized tomography instrument (Scanco mCT 35, Scanco Medical AG, Brütisellen, Switzerland). The ice cream samples were kept at -25°C during the 1.5 hour measurement time. A voxel and instrument resolution of 4.5 micrometers (10% Modulated Transfer Function) was used. The 3D images reconstructed from the sinograms used a Shepp & Logan filtered backprojection extended to a cone-beam geometry.

The method used to quantify the air microstructure consisted of 1) applying an anisotropic diffusion filter to the raw data (ref: P. Perona and J. Malik, Scale-Space and Edge Detection Using Anisotropic Diffusion, IEEE Transactions on Pattern Analysis and Machine Intelligence, 12(7):629-639, July 1990); 2) segmenting the resulting data using the local minima of the voxel gray value histogram as threshold; 3) calculating the resulting air microstructure (i.e. pore) thickness distribution in 3D using the algorithm proposed by Hildebrand and Ruegsegger (1997) (ref: Hildebrand, T. & Ruegsegger, P., A new method for the model-independent assessment of thickness in three-dimensional images, Journal of Microscopy, 1997, 185, 67-75)

The cumulative volume frequency (or also often termed cumulative size distribution based on the volume based size distribution) for the three ice creams are shown in Figure 5. For the comparison of the heat shock stability of the three ice creams we use the $D_{50}$ which signifies that 50% of the air microstructure on a volume base has a dimension smaller than $D_{50}$. It can be clearly seen that the $D_{50}$ for the two ice creams containing protein aggregates, namely 'protein fibrils' and 'aggregate mixture' is significantly smaller than the $D_{50}$ of the 'control' ice cream. Both ice creams containing protein aggregates have a $D_{50}$ = 0.05 mm whereas the control ice cream exhibits $D_{50}$ = 0.08 mm. This demonstrates that the ice creams containing protein fibrils exhibit a significantly higher heat shock stability. Further on the results show that in ice cream a large fraction of up to 70% of protein fibrils can be replaced by other types of protein aggregates which are economically more attractive and still showing a similar improvement of the heat shock stability compared to a control ice cream.

Sensory tests have shown that the replacement of non-aggregated proteins with at least partially aggregated proteins, wherein the aggregated proteins comprise fibrils and at least one other form of protein aggregates preferably selected from the group consisting of worm-like aggregates, spherical aggregates and mixtures thereof can be done without a significant impact on the sensory properties of ice cream.

**Claims**

**1.** An aerated food product, comprising from 0.5 to 10 wt%, preferably from 2 to 6 wt% of proteins at least partially aggregated, wherein the aggregated proteins comprise fibrils and at least one other form of protein aggregates selected from the group consisting of worm-like aggregates, spherical aggregates and mixtures thereof, which spherical aggregates have a mean diameter from 100 nm to 900 nm, and which fibrils have a cross section which is 4-10 nm.

2. An aerated food product according to claim 1, comprising from 0.1 to 4 wt% of mixtures of protein fibrils with worm-like and/or spherical aggregates.

3. An aerated food product according to claim 1 or 2, wherein the protein aggregates comprise mixtures of fibrils and spherical aggregates.

4. An aerated food product according to claim 1 or 2, wherein the protein aggregates comprise mixtures of fibrils and worm-like aggregates.

5. An aerated food product according to claim 1 or 2, wherein the protein aggregates comprise mixtures of fibrils, spherical aggregates and worm-like aggregates.

6. An aerated food product according to claim any one of claims 1 to 5, wherein the protein aggregates comprise at least 30wt% of fibrils.

7. An aerated food product according to any one of claims 1 to 6 wherein the protein aggregates are made from a globular protein selected from whey proteins, egg albumins, blood proteins, soy proteins, wheat proteins, potato proteins, pea proteins, lupin proteins and canola proteins.

8. An aerated food product according to claim 7, wherein the protein aggregates are made from beta-lactoglobulin.

9. An aerated food product according to any one of claims 1 to 8, wherein fibrils are obtainable by heating a protein solution containing from 0.1 to 5% of globular protein for 30 min to 48 hours at 60° to 120°C and a pH below 2.5.

10. An aerated food product according to any one of claims 1 to 3 and 5 to 8, wherein spherical aggregates are obtainable by heating a protein solution containing from 0.5 to 12 wt% of globular proteins for 1 min to 2 hours at 70 to 98°C and a pH of 5.8 to 6.2.

11. An aerated food product according to any one of claims 1, 2 and 4 to 8, wherein worm-like aggregates are obtainable by heating a protein solution containing from 0.5 to 12 wt% of globular proteins for 1 min to 2 hours at 70 to 98°C and a pH of 6.6 to 7.5, preferably 7.

12. An aerated food product according to any one of claims 1 to 11, with an overrun comprised between 20% and 600%.

13. An aerated food product according to any one of claims 1 to 12 **characterized in that** it is selected from the group consisting of indulgent dairy foams, aerated confectionery products and frozen confectionery products.

14. Use of mixtures of protein aggregates comprising fibrils with at least one other form of protein aggregates selected from worm-like aggregates, spherical aggregates and mixtures thereof to enhance foam stability of an aerated food product, which spherical aggregates have a mean diameter from 100 nm to 900 nm and which fibrils have a cross section which is 4-10 nm.

15. A process for the preparation of an aerated food product as defined in any of claims 1 to 13 comprising the steps of:

a) preparing an ingredient mix suitable for the preparation of the food product,
b) contacting the ingredient mix with a mixture of protein aggregates comprising fibrils with at least one other form of protein aggregates preferably selected from worm-like aggregates, spherical aggregates and mixtures thereof,
c) incorporating air into the mix to provide a foam with an overrun comprised between 20 and 600%,
d) optionally processing the foam to provide a ready-to-eat food product.

**Patentansprüche**

1. Mit Luft durchsetztes Lebensmittelprodukt aufweisend von 0,5 bis 10 Gew.-%, vorzugsweise von 2 bis 6 Gew.-%, mindestens teilweise aggregierte Proteine, wobei die aggregierten Proteine Fibrillen und mindestens eine andere Form von Proteinaggregaten aufweisen, die aus der Gruppe ausgewählt sind, die wurmähnliche Aggregate, kugelförmige Aggregate und Mischungen daraus aufweisen, wobei die kugelförmigen Aggregate einen mittleren Durchmesser von 100 nm bis 900 nm und die Fibrillen einen Querschnitt von 4-10 nm besitzen.

2. Mit Luft durchsetztes Lebensmittelprodukt nach Anspruch 1 aufweisend von 0,1 bis 4 Gew.-% Mischungen von Proteinfibrillen mit wurmähnlichen und/oder kugelförmigen Aggregaten.

3. Mit Luft durchsetztes Lebensmittelprodukt nach Anspruch 1 oder 2, wobei die Proteinaggregate Mischungen aus Fibrillen und kugelförmigen Aggregaten aufweisen.

4. Mit Luft durchsetztes Lebensmittelprodukt nach Anspruch 1 oder 2, wobei die Proteinaggregate Mischungen aus Fibrillen und wurmähnlichen Aggregaten aufweisen.

5. Mit Luft durchsetztes Lebensmittelprodukt nach Anspruch 1 oder 2, wobei die Proteinaggregate Mischungen aus Fibrillen, kugelförmigen Aggregaten und wurmähnlichen Aggregaten aufweisen.

6. Mit Luft durchsetztes Lebensmittelprodukt nach einem der Ansprüche 1 bis 5, wobei die Proteinaggregate mindestens 30 Gew.-% Fibrillen aufweisen.

7. Mit Luft durchsetztes Lebensmittelprodukt nach einem der Ansprüche 1 bis 6, wobei die Proteinaggregate aus einem globulären Protein hergestellt sind, das aus Molkenproteinen, Eialbuminen, Blutproteinen, Sojaproteinen, Weizenproteinen, Kartoffelproteinen, Erbsenproteinen, Lupinenproteinen und Rapsproteinen ausgewählt ist.

8. Mit Luft durchsetztes Lebensmittelprodukt nach Anspruch 7, wobei die Proteinaggregate aus Beta-Lactoglobulin hergestellt sind.

9. Mit Luft durchsetztes Lebensmittelprodukt nach einem der Ansprüche 1 bis 8, wobei Fibrillen durch Erhitzen einer Proteinlösung, die von 0,1 bis 5% globuläres Protein enthält, für 30 Minuten bis 48 Stunden bei 60° bis 120°C und einem pH-Wert unter 2,5 erhältlich sind.

10. Mit Luft durchsetztes Lebensmittelprodukt nach einem der Ansprüche 1 bis 3 und 5 bis 8, wobei kugelförmige Aggregate durch Erhitzen einer Proteinlösung, die von 0,5 bis 12 Gew.-% globuläre Proteine enthält, für 1 Minute bis 2 Stunden bei 70° bis 98°C und einem pH-Wert von 5,8 bis 6,2 erhältlich sind.

11. Mit Luft durchsetztes Lebensmittelprodukt nach einem der Ansprüche 1, 2 und 4 bis 8, wobei wurmähnliche Aggregate durch Erhitzen einer Proteinlösung, die von 0,5 bis 12 Gew.-% globuläre Proteine enthält, für 1 Minute bis 2 Stunden bei 70 bis 98°C und einem pH-Wert von 6,6 bis 7,5, vorzugsweise 7, erhältlich sind.

12. Mit Luft durchsetztes Lebensmittelprodukt nach einem der Ansprüche 1 bis 11 mit einem Aufschlag zwischen 20% und 600%.

13. Mit Luft durchsetztes Lebensmittelprodukt nach einem der Ansprüche 1 bis 12, **dadurch gekennzeichnet, dass** es aus der Gruppe ausgewählt ist, die reichhaltigen Milchschaum, mit Luft durchsetzte Süßwarenprodukte und gefrorene Süßspeisen aufweist.

14. Verwendung von Mischungen von Proteinaggregaten aufweisend Fibrillen mit mindestens einer anderen Form von Proteinaggregaten, die aus wurmähnlichen Aggregaten, kugelförmigen Aggregaten und Mischungen ausgewählt sind, um die Schaumstabilität eines mit Luft durchsetzten Lebensmittelproduktes zu verbessern, wobei die kugelförmigen Aggregate einen mittleren Durchmesser von 100 nm bis 900 nm und die Fibrillen einen Querschnitt von 4-10 nm aufweisen.

15. Verfahren zur Herstellung eines mit Luft durchsetzten Lebensmittelproduktes, wie in einem der Ansprüche 1 bis 13 definiert, das die folgenden Schritte aufweist:

    a) Herstellen einer Zutatenmischung, die für die Herstellung des Lebensmittelproduktes geeignet ist,
    b) Inkontaktbringen der Zutatenmischung mit einer Mischung aus Proteinaggregaten aufweisend Fibrillen mit mindestens einer anderen Form von Proteinaggregaten, vorzugsweise ausgewählt aus wurmähnlichen Aggregaten, kugelförmigen Aggregaten und Mischungen daraus,

EP 2 604 126 B1

c) Beimischen von Luft zu der Mischung, um einen Schaum mit einem Aufschlag zwischen 20 und 600% zu liefern,
d) wahlweise Aufbereiten des Schaums, um ein verzehrfertiges Lebensmittelprodukt bereitzustellen.

**Revendications**

1. Produit alimentaire aéré, comprenant de 0,5 à 10% en poids, de préférence de 2 à 6% en poids de protéines au moins partiellement agrégés, dans lequel les protéines agrégées comprennent des fibrilles et au moins une autre forme d'agrégats de protéines choisie parmi le groupe constitué d'agrégats similaires à des vers, d'agrégats sphériques et de mélanges de ceux-ci, lesquels agrégats sphériques ont un diamètre moyen de 100 nm à 900 nm, et lesquelles fibrilles ont une coupe transversale qui est de 4-10 nm.

2. Produit alimentaire aéré selon la revendication 1, comprenant de 0,1 à 4% en poids de mélanges de fibrilles de protéines avec des agrégats similaires à des vers et/ou sphériques.

3. Produit alimentaire aéré selon la revendication 1 ou 2, dans lequel les agrégats de protéines comprennent des mélanges de fibrilles et d'agrégats sphériques.

4. Produit alimentaire aéré selon la revendication 1 ou 2, dans lequel les agrégats de protéines comprennent des mélanges de fibrilles et d'agrégats similaires à des vers.

5. Produit alimentaire aéré selon la revendication 1 ou 2, dans lequel les agrégats de protéines comprennent des mélanges de fibrilles, d'agrégats sphériques et d'agrégats similaires à des vers.

6. Produit alimentaire aéré selon l'une quelconque des revendications 1 à 5, dans lequel les agrégats de protéines comprennent au moins 30% en poids de fibrilles.

7. Produit alimentaire aéré selon l'une quelconque des revendications 1 à 6, dans lequel les agrégats de protéines sont fabriquées à partir d'une protéine globulaire choisie parmi des protéines de lactosérum, des albumines d'oeuf, des protéines de sang, des protéines de soja, des protéines de blé, des protéines de pomme de terre, des protéines de pois, des protéines de lupin et des protéines de canola.

8. Produit alimentaire aéré selon la revendication 7, dans lequel les agrégats de protéines sont fabriqués à partir de bêta-lactoglobuline.

9. Produit alimentaire aéré selon l'une quelconque des revendications 1 à 8, dans lequel des fibrilles sont susceptibles d'être obtenues par chauffage d'une solution de protéines contenant de 0,1 à 5% de protéine globulaire pendant 30 min à 48 heures à entre 60° et 120°C et à un pH inférieur à 2,5.

10. Produit alimentaire aéré selon l'une quelconque des revendications 1 à 3 et 5 à 8, dans lequel des agrégats sphériques sont susceptibles d'être obtenus par chauffage d'une solution de protéines contenant de 0,5 à 12% en poids de protéines globulaires pendant 1 min à 2 heures à entre 70 et 98°C et à un pH de 5,8 à 6,2.

11. Produit alimentaire aéré selon l'une quelconque des revendications 1, 2 et 4 à 8, dans lequel des agrégats similaires à des vers sont susceptibles d'être obtenus par chauffage d'une solution de protéines contenant de 0,5 à 12% en poids de protéines globulaires pendant 1 min à 2 heures à entre 70 et 98°C et à un pH de 6,6 à 7,5, de préférence 7.

12. Produit alimentaire aéré selon l'une quelconque des revendications 1 à 11, avec un foisonnement compris entre 20% et 600%.

13. Produit alimentaire aéré selon l'une quelconque des revendications 1 à 12 **caractérisé en ce qu'**il est choisi parmi le groupe constitué de mousses laitières indulgentes, de produits de confiserie aérés et de produits de confiserie congelés.

14. Utilisation de mélanges d'agrégats de protéines comprenant des fibrilles avec au moins une autre forme d'agrégats de protéines choisie parmi des agrégats similaires à des vers, des agrégats sphériques et des mélanges de ceux-ci afin d'améliorer la stabilité de mousse d'un produit alimentaire aéré, lesquels agrégats sphériques ont un diamètre moyen de 100 nm à 900 nm et lesquelles fibrilles ont une coupe transversale qui est de 4-10 nm.

**15.** Procédé pour la préparation d'un produit alimentaire aéré tel que défini dans l'une quelconque des revendications 1 à 13, comprenant les étapes consistant à :

a) préparer un mélange d'ingrédients approprié pour la préparation du produit alimentaire,
b) mettre en contact le mélange d'ingrédients avec un mélange d'agrégats de protéines comprenant des fibrilles avec au moins une autre forme d'agrégats de protéines choisie de préférence parmi des agrégats similaires à des vers, des agrégats sphériques et des mélanges de ceux-ci,
c) incorporer de l'air dans le mélange afin de fournir une mousse avec un foisonnement compris entre 20 et 600%,
d) facultativement, traiter la mousse afin de fournir un produit alimentaire prêt-à-manger.

Figure 1a)

Figure 1b)

Figure 1c)

500 nm

Figure 2

Figure 3

Figure 4

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1839492 A
- WO 2004049819 A

### Non-patent literature cited in the description

- **MAHMOUDI et al.** *Journal of Agricultural and Food Chemistry,* 2007, vol. 55, 3104-3111
- **R. MOUSAVI et al.** Imaging food freezing using X-ray microtomography. *International Journal of Food Science and Technology,* 2007, vol. 42, 714-727
- **P. PERONA ; J. MALIK.** Scale-Space and Edge Detection Using Anisotropic Diffusion. *IEEE Transactions on Pattern Analysis and Machine Intelligence,* July 1990, vol. 12 (7), 629-639
- **HILDEBRAND, T. ; RUEGSEGGER, P.** A new method for the model-independent assessment of thickness in three-dimensional images. *Journal of Microscopy,* 1997, vol. 185, 67-75